Europäisches Patentamt

**European Patent Office**

Office européen des brevets

(11) Numéro de publication: **0 105 769**
**A2**

## (12) DEMANDE DE BREVET EUROPEEN

(21) Numéro de dépôt: **83401726.1**

(22) Date de dépôt: **30.08.83**

(51) Int. Cl.³: **B 65 G 43/06**

(30) Priorité: **07.09.82 FR 8215163**

(43) Date de publication de la demande:
**18.04.84 Bulletin 84/16**

(84) Etats contractants désignés:
**BE DE GB IT LU NL**

(71) Demandeur: **Société Industrielle d'Equipement
Technique d'Appareils de Manutention
42-48 Avenue du Président Kennedy
F-91170 Viry Chatillon(FR)**

(72) Inventeur: **Ouvre, Pierre
4ter Avenue de Mare Tambour
F-91360 Villemoisson(FR)**

(74) Mandataire: **Thibon-Littaye, Annick
Cabinet A. THIBON-LITTAYE 11 rue de l'Etang
F-78160 Marly Le Roi(FR)**

(54) **Procédé et dispositif de sécurité pour convoyeur aérien à chaîne d'entraînement.**

(57) Le dispositif comprend un circuit annexe (30) pourvu d'une chaîne de sécurité (32) disposée au moins dans les endroits à haut risque en cas de rupture dans le système d'entraînement, comme les tronçons en descente (7), et entraînée par la chaîne d'entraînement (18). La chaîne de sécurité (32) comporte des taquets d'arrêt (34) sur le trajet des supports des charges (6). Des moyens détectent des variations de tension de la chaîne de sécurité (32) et des moyens déclenchent l'arrêt de la chaîne de sécurité lorsque ces variations franchissent un seuil toléré auquel correspond une rupture dans l'entraînement provoquant la butée d'un charge sur l'un des taquets (34) sur la descente.

FIG-1

## PROCEDE ET DISPOSITIF DE SECURITE
## POUR CONVOYEUR AERIEN A CHAINE D'ENTRAINEMENT

La présente invention concerne essentiellement un procédé et un dispositif de sécurité permettant le déclenchement de l'arrêt d'urgence de charges, telles que des carrosseries de véhicules, convoyées par un convoyeur aérien à chaîne d'entraînement.

On connaît déjà diverses installations de convoyeurs aériens à chaîne d'entraînement. Celles auxquelles l'invention s'applique plus particulièrement, bien que non limitativement, sont des installations à double circuit de transport, du type dit " bi-rail". Un premier circuit comporte des chariots qui supporte des charges, suspendues à un rail guidant les déplacements des chariots. Un deuxième circuit, disposé au-dessus du premier, comporte un rail sur lequel roulent des trolleys porteurs d'une chaîne d'entraînement. Certains maillons de cette chaîne sont équipés de doigts d'entraînement articulés ou de taquets pousseurs qui peuvent venir en prise avec les chariots du premier circuit et assurent alors la transmission du mouvement d'entraînement de la chaîne aux charges.

Ce genre d'installation a sur les convoyeurs à simple voie, dits "monorail", divers avantages, dont notamment celui de permettre des zones de stockage où les charges sont séparées du système d'entraînement. Par contre, il y est plus difficile d'assurer la sécurité en cas d'accident sur le système d'entraînement, lorsque le circuit aérien comporte des descentes, et ceci d'autant plus que les charges sont en général de poids plus important. Les accidents résultent le plus souvent d'une rupture d'un des doigts d'entraînement de la chaîne ou des chariots porteurs des charges, ou d'un autre organe de liaison entre la chaîne et les chariots, ou même d'un maillon de la chaîne d'entraînement. Ceci se traduit par une chute le long de la descente du chariot portant la

B 2831
ATL/PO/cb

charge, qui vient buter les chariots précédents. Hors du fait que les charges peuvent être renversées et se détériorer, il peut se produire des accidents très graves, résultant en morts d'hommes, si des ouvriers se trouvent à proximité, ce qui est souvent le cas.

Il est donc inadmissible de courir un tel risque. Il est indispensable de trouver un système de sécurité permettant d'éviter la chute du chariot dans les descentes lors d'une rupture dans le système d'entraînement. Or les dispositifs de freinage utilisés parfois se révèlent inefficaces dans ce type d'installation, d'autant que les charges sont en général très lourdes, ce qui augmente encore le danger.

La présente invention a donc pour but de résoudre les inconvénients précités en fournissant une solution permettant de déclencher l'arrêt d'urgence des charges convoyées par un convoyeur aérien à chaîne d'entraînement, ou plus précisément des chariots supportant les charges, qui soit tout-à-fait sûre et de conception particulièrement simple.

Cette solution consiste, selon la présente invention, en un procédé de déclenchement de l'arrêt d'urgence dans un convoyeur aérien de charges à chaîne d'entraînement, caractérisé en ce qu'on prévoit un circuit annexe pourvu d'une chaîne de sécurité, disposé au moins dans les endroits à haut risque en cas de rupture de l'entraînement, comme les descentes, cette chaîne de sécurité étant entraînée par la chaîne d'entraînement et comportant des taquets d'arrêt dont chacun se dispose devant une charge sur son trajet, on détecte les variations de tension de la chaîne de sécurité et l'on provoque l'arrêt de la chaîne de sécurité lorsque ces variations de tension franchissent un seuil toléré auquel correspond la butée d'une charge sur le taquet qui la précède par suite d'une rupture dans le système d'entraînement du convoyeur aérien.

De préférence, on provoque aussi simultanément l'arrêt de l'entraînement de la chaîne d'entraînement.

Selon un mode de réalisation particulier, pour une chaîne de sécurité comportant des pignons de renvoi, on provoque l'arrêt de la chaîne de sécurité en déclenchant un système de freinage de la rotation de l'un desdits pignons de renvoi.

D'autre part, la présente invention concerne aussi un dispostif de déclenchement de l'arrêt d'urgence de charges, telles que des carrosseries de véhicules, convoyées par un convoyeur aérien à chaîne d'entraînement, caractérisé en ce qu'il comprend un circuit annexe pourvu d'une chaîne de sécurité, disposée au moins dans les endroits à haut risque comme les descentes, et entraînée par ladite chaîne d'entraînement ; ladite chaîne de sécurité comportant des taquets d'arrêt dont chacun se place devant l'une desdites charges sur son trajet ; des moyens de détection des variations de tension de la chaîne de sécurité et des moyens de déclenchement de l'arrêt de la chaîne de sécurité lorsque les variations de tension franchissent un seuil toléré auquel correspond la butée d'une charge sur le taquet qui la précède par suite d'une rupture dans le système d'entraînement du convoyeur aérien.

Ainsi, avec la présente invention, un accident sur le système d'entraînement ne peut plus provoquer une chute brutale des charges le long des descentes, et l'on évite ainsi tout risque d'accident corporel en même temps qu'un endommagement des charges.

D'autres buts, caractéristiques et avantages de la présente invention apparaîtront plus clairement à la lumière de la description explicative qui va suivre et dans laquelle il est fait référence aux dessins annexés. Ceux-ci représentent un mode de réalisation actuellement préféré de la présente invention qui est donné simplement à titre d'exemple et qui ne saurait donc en aucune façon en limiter la portée.

Dans les dessins :

- la figure 1 est une vue schématique partielle d'un convoyeur aérien du type bi-rail équipé d'un dispositif de sécurité selon l'invention, disposé à un endroit ou le circuit des charges est en descente ;

- la figure 2 est une vue de détail agrandie montrant le dispositif en bas de la descente et de profil;

- la figure 3 est une vue de face selon la flèche III de la figure 2 ;

- la figure 4 est une vue de détail agrandie selon la flèche IV de la figure 1, au niveau d'un pignon de renvoi de la chaîne de sécurité, en haut de la descente ;

- la figure 5 est une vue de dessus selon la flèche V de la figure 4 au niveau du même pignon de renvoi ;

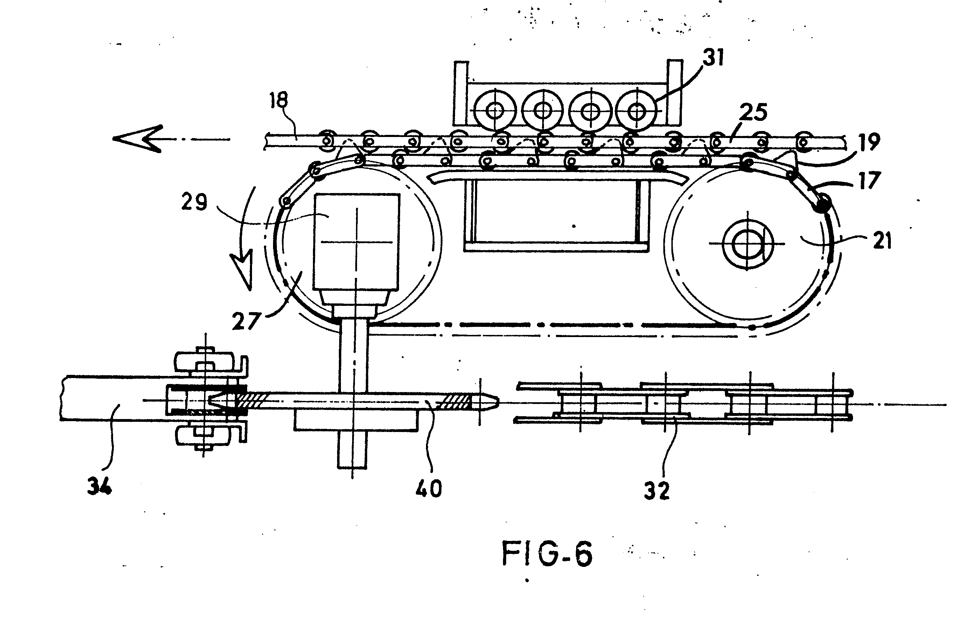

- la figure 6 montre un détail de la transmission de mouvement entre la chaîne d'entraînement et la chaîne de sécurité.

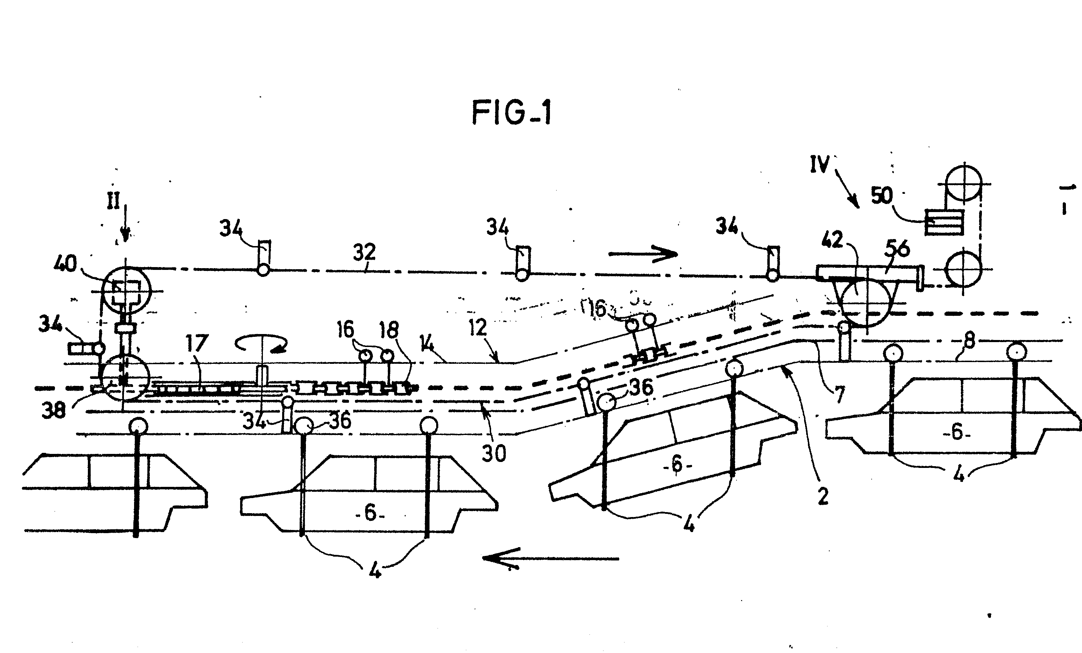

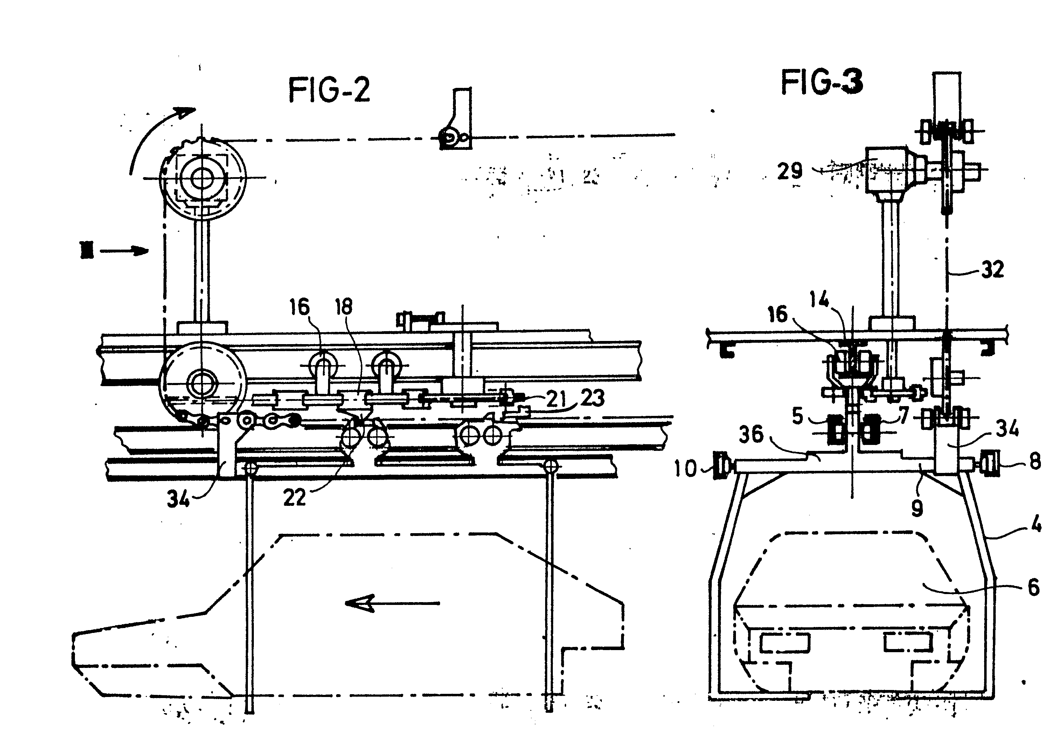

Sur la figure 1, on a représenté schématiquement et partiellement un exemple de convoyeur aérien à chaîne d'entraînement qui est du type bi-rail. Il comporte deux circuits. Suivant le premier circuit circulent des balancelles (4) portant des charges (6) et suspendues à des chariots (36) munis de galets aptes à se déplacer dans des rails de guidage (5,7), à section en U, que l'on voit bien à la figure 3. Les balancelles sont en outre maintenues par des rails de stabilité (8,10), dans lesquels roulent des galets prévus aux extrémités d'une barre horizontale supérieure (9) de chaque balancelle. Le deuxième circuit (12) est disposé suivant le même trajet au-dessus du premier circuit (2). Il est défini par un rail (14) à section en I sur lequel viennent rouler les galets de trolleys (16), porteurs d'une chaîne (18) qui constitue la chaîne d'entraînement principale de l'installation.

La chaîne (18) est entraînée par un moteur non représenté. Comme on le voit sur les figures 2 et 3, certains maillons de cette chaîne (18) sont équipés de doigts d'entraînement articulés (22), capables de venir s'accrocher par dessus sur les chariots (36) auxquels sont suspendues les balancelles (4), de manière à les entraîner avec la chaîne (18). Une fois sur deux les doigts d'entraînement sont remplacés par des taquets pousseurs (23) propres à coopérer également avec les chariots (36). Chaque charge, constituée ici par une caisse de véhicule automobile (6), est donc suspendue à un chariot avant tracté et un chariot arrière poussé. D'autres organes classiques du convoyeur aérien du type bi-rail ne seront pas davantage décrits.

Comme indiqué précédemment, les zones où le circuit du convoyeur est en descente constituent des endroits à haut risque en cas d'accident sur le système d'entraînement, qu'il y ait par exemple rupture d'un doigt d'entraînement (22), rupture au niveau des liaisons entre les trolleys (16) et les maillons de la chaîne (18), ou rupture de la chaîne elle-même. N'étant plus retenues par la chaîne d'entrainement, les charges suspendues aux balancelles (4) descendent alors sur les rails (5, 7) et viennent buter sur les charges qui les précèdent, situées au bas de la descente, avec tous les risques de destruction des charges et d'accident pour les personnes se trouvant à proximité.

C'est pour éviter ces risques qu'intervient, selon la présente invention, le dispositif de déclenchement de l'arrêt d'urgence des charges. Ce dispositif comprend un circuit annexe (30) de guidage d'une chaîne dite de sécurité (32), qui longe le circuit principal localement, au moins dans chaque endroit à haut risque, comme la descente des figures. Cette chaîne de sécurité (32) tourne en circuit fermé dans un plan vertical sur divers pignons de renvoi, dont les pignons (38), (40) et (42) par exemple. Elle est entraînée en même temps que la chaîne d'entraînement (18), par celle-ci d'une manière indirecte. A cet effet, une chaîne de transmission du mouvement (17) décrit une boucle fermée longeant la chaîne d'entraînement sur un court tronçon, en bas de la descente. Cette chaîne (17), mieux visible sur la figure (6), présente extérieurement des dents (19) qui engrènent avec les maillons (25) de la chaîne (18). Elle engrène par ailleurs avec deux pignons (21) et (27) qui définissent son circuit. Par l'intermédiaire d'un renvoi d'angle (29), le pignon (27) transmet son mouvement de rotation à l'un des pignons (40) avec lesquels engrène la chaîne de sécurité (32). La figure (6) montre une réalisation en elle-même classique d'un tel système de transmission de mouvement, avec des galets guides (31) appuyant les deux chaînes (17) et (18) l'une contre l'autre.

La chaîne de sécurité (32) comporte des taquets (34), régulièrement disposés à des intervalles correspondant à ceux qui séparent les charges successives le long du convoyeur. Ces taquets sont orientés vers l'extérieur du circuit de la chaîne de sécurité. Sur tout son brin inférieur où cette chaîne longe le circuit principal, avant pendant et après le tronçon en descente (7), les taquets (34) se placent sur le trajet des charges, ou plus exactement sur le trajet des chariots qui les portent, devant la barre (9) du chariot avant (36) de l'une des charges successives. La chaîne de sécurité est réglée de telle manière qu'en fonctionnement normal, il subsiste un jeu entre le taquet (34) et le chariot (36) correspondant en tous points du circuit.

B 2031
ATL/PO/cb

Selon l'invention on a aussi prévu de pouvoir détecter des variations de tension de la chaîne de sécurité (32) et déclencher l'arrêt de l'entraînement lorsque ces variations de tension franchissent un seuil toléré auquel correspond une rupture dans le système d'entraînement. Il s'agit des surtensions qu'exerce alors sur le brin inférieur de la chaîne le poids des charges portées par les chariots (36) qui, n'étant plus retenus par la chaîne d'entraînement, viennent buter sur les taquets (34) qui les précèdent.

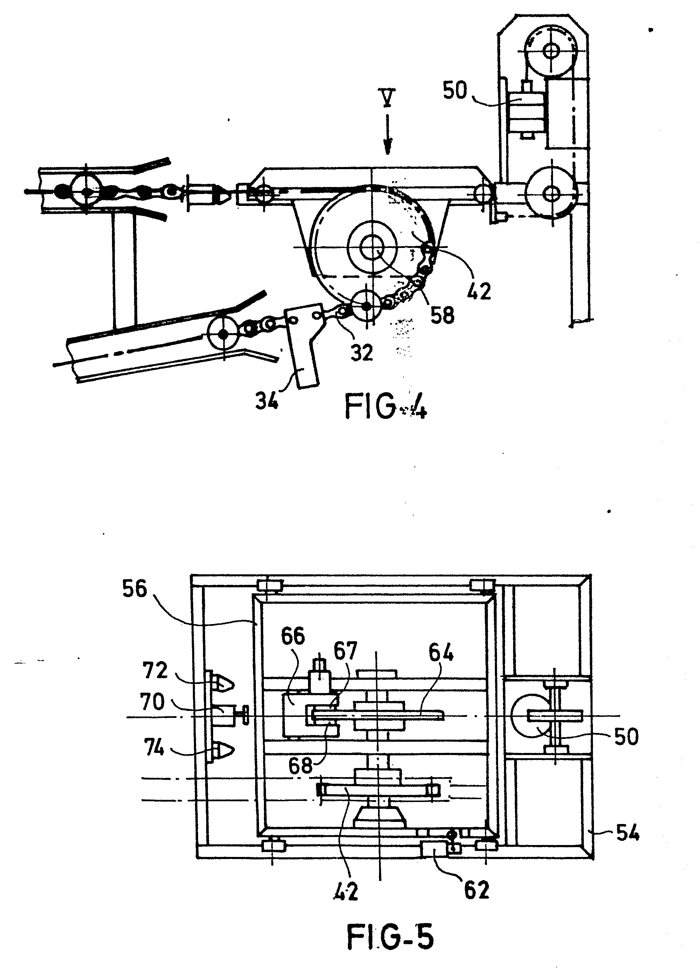

Conformément au mode de réalisation illustré par la figure 5, des moyens de détection de la tension de la chaîne de sécurité comprennent un châssis (54) sur lequel peut rouler un cadre flottant (56), équilibré par un système à contre-poids (50), parfaitement visible à la figure 4, qui tend à entraîner le cadre flottant vers la droite de la figure 5. Le cadre flottant (56) est prévu pour supporter un arbre (58) qui constitue l'axe de rotation du pignon de renvoi (42) de la chaîne de sécurité (32) situé en haut de la descente. En outre, un élément de détection (62) est disposé sur le châssis (54), de manière à être sensible au déplacement que subit le cadre flottant (56) par rapport au châssis (54) dès que le poids d'une charge provoque une surtension de la chaîne de sécurité (32).

Pour limiter le déplacement du cadre flottant (56), le châssis (54) comporte sur son bord avant et à l'opposé du système à contre-poids (50), un dispositif amortisseur (70) et des butées (72, 74,) avantageusement en caoutchouc.

L'élément de détection (62) est un micro-contact de fin de course qui, en actionnant un frein (66), déclenche l'arrêt de la chaîne de sécurité (32), et avantageusement aussi l'arrêt du moteur d'entraînement de la chaîne principale (18). Le freinage s'exerce, par

B 2831
ATL/PO/cb

des mâchoires (67), sur un disque (64) monté sur l'arbre (58) du pignon de renvoi (42) de manière à tourner avec lui. Le système de freinage peut être à commande hydraulique, pneumatique ou électrique.

On comprend ainsi que par le dispositif de sécurité selon· l'invention, dans le convoyeur aérien décrit, on réalise d'urgence l'arrêt des charges en cas de rupture de l'entraînement avec à la fois puissance et sensibilité, grâce à une transmission rapide de l'information directement par le brin inférieur de la chaîne de sécurité et le pignon précédant juste la descente. L'effet est immédiat, car il suffit d'un déplacement de par exemple 1 centimètre du cadre flottant 56, relativement au châssis (54), pour provoquer l'action du frein (66) sur le disque (64) et l'arrêt de la rotation du pignon de renvoi (42) de la chaîne de sécurité (32).

Mais bien entendu, l'invention n'est pas limitée au mode de réalisation particulier qui vient d'être décrit et elle englobe tous les moyens constituant des équivalents techniques des moyens décrits ainsi que leurs combinaisons.

## REVENDICATIONS

1. Procédé de déclenchement d'un arrêt d'urgence dans un convoyeur aérien de charges à chaîne d'entraînement, caractérisé en ce que l'on prévoit un circuit annexe (30) pourvu d'une chaîne de sécurité (32) longeant localement le circuit du convoyeur dans un tronçon à haut risque en cas de rupture de l'entraînement, comme une descente, ladite chaîne de sécurité (32) étant entraînée par la chaîne d'entraînement (18) et comportant des taquets (34) dont chacun se place devant une charge (6) sur au moins tout son trajet dans ledit tronçon, on détecte les variations de tension de la chaîne de sécurité (32) et l'on provoque l'arrêt de la chaîne de sécurité (32) lorsque ces variations de tension franchissent un seuil toléré auquel correspond la butée d'une charge sur le taquet qui la précède par suite d'une rupture dans le système d'entraînement du convoyeur aérien.

2. Procédé selon la revendication 1, caractérisé en ce que l'on provoque aussi simultanément l'arrêt de l'entraînement de la chaîne d'entraînement (18).

3. Procédé selon la revendication 1 ou 2, caractérisé en ce que l'on provoque l'arrêt de la chaîne de sécurité (32) en déclenchant une action de freinage de la rotation d'au moins un pignon de renvoi (42) guidant ladite chaîne de sécurité (32).

4. Dispositif de sécurité pour déclencher un arrêt d'urgence dans un convoyeur aérien de charges à chaîne d'entraînement, caractérisé en ce qu'il comprend un circuit annexe (30) de guidage d'une chaîne de sécurité (32) dont une partie longe le circuit du convoyeur sur un tronçon à haut risque en cas de rupture de l'entraînement comme une descente (7) ; des moyens d'entraînement de la chaîne de sécurité en parallèle avec la chaîne d'entraînement (18) ; ladite chaîne de sécurité (32) comportant des taquets d'arrêt (34) dont chacun se place alors devant une des charges (6) sur au moins tout son trajet le long dudit tronçon ; des moyens de détection de variations de tension de la chaîne de sécurité et des moyens de déclenchement de l'arrêt de la chaîne de sécurité (32) lorsque ces variations de tension franchissent un seuil toléré auquel correspond la butée d'une charge sur le taquet qui la précède par suite d'une rupture dans le système d'entraînement du convoyeur aérien.

5. Dispositif selon la revendication 4, caractérisé en ce que les moyens de détection de variations de la tension de la chaîne comprennent un châssis (54) sur lequel peut rouler un cadre flottant (56) équilibré par un système à contre-poids (58) et supportant l'arbre de rotation du pignon de renvoi (42) du circuit de la chaîne de sécurité (32), ainsi qu'un élément (62) de détection du déplacement du cadre flottant (56) sur le châssis (54) provoqué par une surtension de la chaîne de sécurité (32).

6. Dispositif selon la revendication 5, caractérisé en ce que l'élément de détection (62) est un micro-contact de fin de course actionnant les moyens de déclenchement de l'arrêt de la chaîne de sécurité (32) et de préférence, commandant aussi l'arrêt du moteur assurant les déplacements de la chaîne d'entraînement (18).

7. Dispositif suivant la revendication 5 ou 6, caractérisé en ce que les moyens de déclenchement de l'arrêt de la chaîne de sécurité (32) comprennent un disque (64) monté sur l'arbre (58) du pignon de renvoi (42) de manière à tourner avec lui ; et des moyens de freinage (66) dudit disque (64) jusqu'à son arrêt, tels que des mâchoires de frein (67), (68) dont le serrage sur le dique (64) est commandé par l'élément de détection (62).

8. Dispositif selon l'une des revendications 5 à 7, caractérisé en ce que ledit pignon de renvoi (42) se trouve sur le circuit annexe (30) au point haut dudit tronçon du circuit du convoyeur.

9. Dispositif selon la revendication 8, caractérisé en ce que lesdits moyens d'entraînement de la chaîne de sécurité (32) comprennent une chaîne de transmission du mouvement de la chaîne d'entraînement à la chaîne de sécurité et en ce qu'ils sont disposés en bas dudit tronçon (7).

10. Dispositif selon l'une des revendications 4 à 9, caractérisé en ce que ledit circuit annexe (30) est disposé dans un plan vertical au-dessus du circuit de la chaîne d'entraînement (18).

11. Dispositif selon l'une quelconque des revendications 4 à 10, caractérisé en ce que le convoyeur aérien est du type bi-rail comprenant un premier circuit (2) comportant des chariots (36) portant les charges (6) aptes à se déplacer sur des rails (5,7), et un deuxième circuit (12) disposé au-dessus du premier circuit (2), comportant un rail (14) de guidage de trolleys porteurs de la chaîne d'entraînement (18) dont certains maillons sont équipés alternativement de doigts d'entraînement (22) articulés ou de taquets pousseurs, venant en position coopérante avec les chariots (36) respectivement à l'avant et à l'arrière de chacune des charges successives, lesdits taquets (34) de la chaîne de sécurité se plaçant alors, sur ledit tronçon, devant les chariots (36) situés à l'avant des charges successives.

# FIG.1

FIG-2

FIG-3

0105769

2 -

FIG-4

FIG-5

FIG-6